Europäisches Patentamt

(19) European Patent Office

Office européen des brevets

(11) Veröffentlichungsnummer: **0 012 166**
**B1**

## (12) EUROPÄISCHE PATENTSCHRIFT

(45) Veröffentlichungstag der Patentschrift:
27.10.82

(51) Int. Cl.³: **F 16 L  47/06,** F 16 L  21/02,
F 16 J  15/14

(21) Anmeldenummer: **79103876.3**

(22) Anmeldetag: **09.10.79**

(54) **Dichtungsring aus gummielastischem Werkstoff für Rippenrohre, insbesondere aus Kunststoff.**

(30) Priorität: **18.12.78  DE 2854662**

(43) Veröffentlichungstag der Anmeldung:
**25.06.80 Patentblatt 80/13**

(45) Bekanntmachung des Hinweises auf die Patenterteilung:
**27.10.82 Patentblatt 82/43**

(84) Benannte Vertragsstaaten:
**AT BE CH FR GB NL SE**

(56) Entgegenhaltungen:
**DD-A-62 216**
**DE-A-1 942 335**
**DE-A-2 330 594**
**DE-A-2 421 786**
**DE-A-2 614 575**
**DE-B-1 247 773**
**DE-B-1 750 390**
**FR-A-2 387 408**
**GB-A-583 459**
**US-A-2 707 003**
**US-A-3 317 214**

(73) Patentinhaber: **WOCO Franz-Josef Wolf & Co.,
Sprudelallee 19, D-6483 Bad Soden-Salmünster (DE)**

(72) Erfinder: **Wolf, Franz Josef, Sprudelallee 19, D-6483 Bad
Soden-Salmünster (DE)**
Erfinder: **Kunze, Hans Joachim, Vogelsbergstrasse 12,
D-6483 Bad Soden-Salmünster (DE)**

(74) Vertreter: **Jaeger, Klaus, Dr.rer.nat. Dipl.-Chem. et al,
Jaeger, Grams & Pontani Patentanwälte
Bergstrasse 48 1/2, D-8035 München-Gauting (DE)**

## Dichtungsring aus gummielastischem Werkstoff für Rippenrohre, insbesondere aus Kunststoff

Die Erfindung betrifft einen Dichtungsring aus gummielastischem Werkstoff der im Oberbegriff des Patentanspruchs 1 genannten Art.

Rippenrohre im Sinne der Erfindung sind Rohre, die auf ihrer äußeren Mantelfläche in axial äquidistanter Folge in sich geschlossen umlaufende radiale Versteifungsrippen tragen. Aus Gründen der Material- und Gewichtsersparnis sind diese Versteifungsrippen nicht massiv, sondern hohl und nach Maßgabe der geforderten Mindestfestigkeit möglichst dünnwandig ausgebildet. Die Versteifungsrippen können dabei nach radial innen offen sein und selbst den eigentlichen Mantel des Rohres bilden, wie dies beispielsweise bei den sogenannten Wellrohren der Fall ist, können aber auch nur außen auf den Mantel eines innen glattwandig zylindrischen Rohres aufgesetzt sein, wie dies bei den eigentlichen Rippenrohren im engeren Sinne dieses Begriffs der Fall ist. Rippenrohre dieser Art werden überwiegend aus Kunststoff oder Metall, aber auch aus anderen Werkstoffen gefertigt. Als Kunststoffrohre werden sie vor allem im Bauwesen für die Erdverlegung von Abwasserleitungen eingesetzt.

Rippenrohre der in Rede stehenden Art werden in aller Regel ohne angeformte Verbindungsmuffen oder Verbindungsflansche hergestellt. Die einzelnen Rohrabschnitte werden durch Steckmuffen oder Überschiebmuffen miteinander verbunden, die eine glatte zylindrische Innenwand aufweisen und die stirnseitig aneinanderliegenden miteinander zu verbindenden Spitzenden der Rippenrohre konzentrisch von außen übergreifend umschließen. Diese Steckmuffen können ebenfalls aus Kunststoff, Metall oder prinzipiell beliebigen anderen Werkstoffen, beispielsweise auch keramischen Werkstoffen, bestehen.

An die Dichtheit solcher Rohrsteckverbindungen, hier speziell solcher Rippenrohrsteckverbindungen, werden zunehmend höhere Anforderungen gestellt. Dies trifft insbesondere für erdverlegte Rohrleitungen im Bereich der Wasserwirtschaft, speziell im Abwasserbereich, zu.

Nach dem gebräuchlichen Stand der Technik wird die Abdichtung solcher Rohrsteckverbindungen zwischen dem Spitzende eines Rippenrohres und einer innwandig glatten Muffe durch einen Rundschnurring, einen sogenannten O-Ring, bewirkt, der auf dem in die Muffe einzuschiebenden Abschnitt des Spitzendes in eine der Sicken zwischen zwei benachbarten Rippen des Spitzendes eingelegt ist. »Sicke« im Sinne der Erfindung ist also das Wellental oder die Ringnut, die zwischen zwei unmittelbar benachbarten radial auswärts vorspringenden Versteifungsrippen des Rippenrohres gebildet ist.

Insbesondere bei Rippenrohren aus Kunststoff haben die Sicken im Axialschnitt ein im wesentlichen trapezförmiges Profil, wobei die große Basis dieses Trapezes der radial außenliegenden offenen Seite der Sicke entspricht. Der Schnurdurchmesser des für die gebräuchlichen Steckverbindungen als Dichtungsring verwendeten Rundschnurrings ist dabei üblicherweise so bemessen, daß er geringfügig kleiner als die durchschnittliche Öffnung der Sicke zwischen ihren Oberkanten in axialer Richtung breit ist. Der Ringdurchmesser des Rundschnurringes ist so gewählt, daß der Rundschnurring unter geringer radialer Vorspannung gerade geringfügig über seinen halben Durchmesser hinaus in die Sicke hineingezogen wird. Beim Überschieben der Muffe wird der überstehende Teil des Rundschnurringes in die Sicke hinein verpreßt. Dabei wirkt der Hauptanteil des durch die Verpressung des Dichtungsringes entstehenden Druckes im wesentlichen in axialer Richtung auf die beiden Flanken der Sicke. Die Dichtung dieser Steckverbindung wird also im wesentlichen zwischen der Innenwand der Muffe und dem oberen Scheitel des Rundschnurringes sowie den Seitenflächen des Ringes und den Flankenflächen der Sicke bzw. der Rippen bewirkt. Nur zum geringeren Teil erfolgt zusätzlich eine Verpressung mit rein radialer Komponente zwischen dem oberen Scheitel des Rundschnurringes und der Innenwand der Muffe einerseits sowie dem unteren Scheitel des Rundschnurringes und der Sohle der Sicke andererseits (CH-A-496 199).

Nachteilig bei dieser Art der Dichtung ist der hohe axial wirkende Druck auf die Flanken der Sicke bzw. der Rippen. Diese auf radiale Versteifung ausgelegten Rippenflankenwände sind bei den meisten Rippenrohren mit in der Regel hohlen Versteifungsrippen nicht gegen eine axiale Krafteinwirkung versteift. Die Versteifungsrippen werden daher unter dem seitlichen Druck des Rundschnurringes auseinandergedrückt. Dieses axiale Auseinanderdrücken der Sicke kann dabei rasch oder erst allmählich unter längerer Belastung erfolgen. In jedem Fall führt das seitliche (axiale) Nachgeben der Sickenflanken zu einem Abbau der axial wirkenden Dichtungskräfte. Durch die plastische Verformung der Flanken der Sicke und die in axialer Richtung erleichterte Verformung des Rundschnurringes durch Aufhebung der seitlichen Verformungswiderstände nimmt gleichzeitig auch die ohnehin nur geringe radiale Verpressungskomponente oder, was im Prinzip das Gleiche ist, die radiale Dichtkraft ab. Insgesamt tritt daher aufgrund der beim Verpressen des Rundschnurringes auftretenden axial auf die Sickenflanken einwirkenden Verformungskräfte und die dadurch bewirkte plastische Verformung der Versteifungsrippen eine spürbare Verminderung des Grenzdruckes ein, bis zu dem die so gedichtete Rohrsteckverbindung dicht ist. Die gebräuchlichen Rundschnurdichtungen vermögen daher häufig nicht mehr die in den verschiedenen Prüfungsvorschriften gestellten Dichtheitsanforderungen zu erfüllen. Dabei scheidet von vornherein aus, den Durchmesser des Rundschnurringes einfach von vornherein so zu vergrößern, daß die durch die plastische Verformung der Rippen eintretenden Verpressungsverluste aufgefangen werden. Ein solcherart verstärkter Rundschnurring würde nämlich kaum noch das Überschieben der Steckmuffe über das Spitzende ermöglichen. Zum einen würden viel zu hohe Einschubkräfte benötigt, zum anderen würde der Rundschnurring aus der ihm zugeordneten Sicke, auf der er ja höher aufliegen würde, nach Art eines Rollringes herausgerollt und über die Rippenflächen des Spitzendes abgerollt werden. Dadurch würden unkontrollierte Verwindungen im Dichtungsring und insgesamt unkontrollierbare Dichtungsverhältnisse entstehen, die insbesondere für die Erdverlegung von Abwasserleitungen untragbar sind.

Zum Stand der Technik ist noch ein Dichtungsring bekanntgeworden (DE-A-2 421 786), der in eine Ringnut eingelegt wird. Der am Boden der Nut teilweise anliegende, dort eine Höhlung enthaltende, aus der Nut etwas hervorstehende Dichtring weist auf der eigentlichen Dichtfläche eine leichte Wellenform mit einem mittigen Wellental auf, wobei die Wellenberge zu den Ringflanken hin in Schultern, die an den Nutflanken anliegen, übergehen. Zwischen diesen Schultern und der bodenseitigen Anlagefläche der Ringflanken ist unterhalb der Schultern eine im Querschnitt dreieckförmige Ausnehmung ausgebildet, deren kleine Kathete die Innenfläche der Schulter begrenzt und deren Hypotenuse in der Ringflanke ausgeformt ist, wobei zwischen der dreieckförmigen Ausnehmung und der bodenseitigen Höhlung eine größere Fläche des Ringes an der Nutflanke anliegt. Hierbei ist die axiale Breite des Dichtungsringes auf der Schulterhöhe geringer als die axiale Breite der Sicke oder Nut zwischen ihren radial außenliegenden Kanten, die axiale Breite des Ringfußes ist gleich der axialen Breite der Sohle der Sicke und die in der Radialebene des Dichtungsringes liegenden Seitenflächen haben keine konkave Ausbildung, vielmehr, wie gesagt, eine dreieckförmige Ausnehmung, die in eine an der Nutflanke anliegende Fläche übergeht. Insofern wird bei Aufbringen eines radialen Druckes auf den Dichtungsring, der primär auf die Wellenberge an der eigentlichen Dichtfläche wirkt, ein beträchtlicher Druck auf die Nutflanken in axialer Richtung erzeugt, da die an den Nutflanken anliegenden Flächen der Schultern sich nach auswärts verlagern und somit die Ringflanken vollständig oder nahezu vollständig an den Nutflanken zur Anlage kommen. Im Gegensatz zum Erfindungsgegenstand wird die beim Anpressen des Dichtungsringes an die Dichtflächen hervorgerufene Belastung der Stickverbindung somit nicht ausschließlich in die Bereiche der größten Stabilität der Steckverbindung verlegt, nämlich auf die Innenwand der Muffe und auf den Boden der Sicke in ausschließlich radialer Richtung, sondern in axialer Richtung auf die Flanken der Sicke.

Angesichts dieses Standes der Technik liegt der Erfindung die Aufgabe zugrunde, einen Dichtungsring der eingangs genannten Art für Rippenrohr-Steckverbindungen zu schaffen, der die Rippenrohr-Steckverbindung auch langfristig bis zu sehr hohen Drücken zuverlässig dichtet und dabei nur vergleichsweise geringe Einschubkräfte für das Einschieben des Spitzendes in die Muffe erfordert und die Rippen des Spitzendes axial kaum belastet.

Zur Lösung dieser Aufgabe wird ein Dichtungsring der im Oberbegriff des Patentanspruchs 1 genannten und eingangs beschriebenen Art vorgeschalgen, der erfindungsgemäß die im kennzeichnenden Teil des Patentanspruchs 1 genannten Merkmale aufweist.

Der aus gummielastischem Werkstoff bestehende Dichtungsring weist also ein Schnurprofil auf, das in seiner Grundform dem Profil der Sicke zumindest im wesentlichen angepaßt ist. Bei einem trapezförmigen Profil der Sicke ist also beispielsweise auch das Profil der Ringschnur des Dichtungsringes zumindest in den Grundzügen trapezförmig, also etwa nach Art eines Keilriemens, ausgebildet. Durch diese Profilangleichung wird bereits völlig spannungsfrei ein hohes Maß an axialer Stabilisierung des Dichtungsringes erreicht.

Das Schnurprofil des Dichtungsringes ist jedoch dem Profil der Sicke nicht exakt komplementär angeglichen, sondern weicht von einer solchen komplementären Ausbildung in drei wesentlichen Punkten ab: (1) das Schnurprofil ist durch axial vorspringende Ringschultern im Bereich der Oberkanten der Sicke geringfügig, aber doch deutlich breiter als die größte axiale Öffnung der Sicke zwischen ihren Oberkanten ausgebildet, (2) ist auf seinen im wesentlichen radial liegenden Seitenflächen so stark konkav ausgebildet, daß diese auch bei stärkster radialer Verpressung des Dichtungsringes die Seitenflanken der Sicke kaum oder mit nur unbeachtlichem Andruck berühren, und (3) ist in seiner axialen Fußbreite, also in der axialen Breite an seinem radial innenliegenden Rand, zumindest geringfügig schmaler als die axiale Breite der Sohle der Sicke ausgebildet, so daß auch in diesem Bereich das verpreßte Material des Dichtungsringes durch eine Materialverformung ausweichen kann, ohne die die Sicken einschließenden Rippen des Spitzendes axial in beachtlichem Maß zu belasten. Bei dieser Schnurprofilausbildung ist die Ringschnur in der Radialebene des Ringes deutlich höher ausgebildet als die Sicke tief ist. Der Betrag der die radiale Tiefe der Sicke überschreitenden radialen Höhe des Dichtungsringes ist dabei entsprechend der jeweils benötigten Verpressung des Dichtungsringes, also entsprechend dem jeweils benötigten Dichtungsdruck, bemessen. Beim Überschieben der Steckmuffe über das Spitzende erfolgt daher eine praktisch reine radiale Verpressung des Dichtungsringes zwischen der Innenwand der Muffe und der Sohle der Sicke. Dadurch, daß der auf diese Weise radial zusammengedrückte Dichtungsring in der Sicke ausreichend Platz zur Materialverformung zur Verfügung hat, tritt durch diese Verformung keine axiale Belastung der Seitenwände der Rippen ein. Die notwendige axiale Stabilisierung des Dichtungsringes erfolgt dabei durch die am Dichtungsring angeformten axial vorspringenden Ringschultern, die beim radialen Stauchen des Dichtungsringes zwischen die Oberkanten der Sicke eingedrückt werden. Da die Rippen des Rippenrohres in diesem Bereich ihre größte axiale Festigkeit aufweisen, werden sie durch dieses Eindrücken der Ringschultern des Dichtungsringes nicht verformt. Außerdem sind die durch die zwischen die Sickenoberkanten eingedrückten Ringschultern auf diese Oberkanten ausgübten axialen Druckkräfte im Vergleich zu den durch Rundschnurringe auf die Flanken der Rippen ausgeübten axialen Kräfte verschwindend klein. Dennoch tragen auf diese Weise auch die zwischen die Sickenoberkanten eingedrückten Ringschultern, deren Hauptaufgabe die axiale Stabilisierung des Dichtungsringes ist, noch in geringerem Ausmaß zur Dichtfunktion des Ringes bei.

In diesem Sinne kann also davon ausgegangen werden, daß der Dichtungsring durch eine zumindest im wesentlichen reine radiale Materialverpressung entsprechend einer Kompressionsdichtung dichtet und durch axiales Einspannen zwischen den Sickenoberkanten axial gegen ein sogenanntes »Schwimmen« der Dichtung stabilisiert ist. Die Belastung der Steckverbindung erfolgt also ausschließlich in den Bereichen der größten Stabilität, nämlich auf der Innenwand der Steckmuffe, auf dem Boden oder der Sohle der Sicke in ausschließlich radialer Richtung und in vergleichsweise nur geringem Ausmaß in axialer Richtung zwischen den Sickenoberkanten. Dadurch, daß die Dichtungskraft durch eine praktisch ausschließliche radiale Verpressung des Dichtungsringes ohne axiale Belastung der dünnwandigen Rippen aufgebracht wird, bleibt die unter Verwendung des Dichtungsringes der Erfindung hergestellte Rohrsteckverbindung auch langfristig unvermindert dicht.

Durch die Einpassung des Dichtungsringes in die Sicke ist der Dichtungsring weiterhin leicht auf dem Spitzende des Rohres montierbar und dadurch, daß sie relativ tief in der Sicke liegt, auch unverlierbar.

Nach einer Weiterbildung der Erfindung ist die radial außenliegende Fläche des Dichtungsringes, die sogenannte Ringkrone, als radial auswärts vorspringende Wulst mit Rundprofil, also etwa als Buckelring, ausgebildet. Dadurch werden vor allem die zum Einschieben des Spitzendes in die Steckmuffe bzw. zum Überschieben der Muffe über das Spitzende benötigten Einschubkräfte durch eine Verminderung der Auflagefläche zwischen Dichtungsring und Muffeninnenwand und eine dadurch bewirkte Verminderung der Reibungskräfte spürbar vermindert. Außerdem kann dadurch bei gleicher Rückstellkraft des gummielastischen Dichtungsringes ein wesentlich höherer Dichtungsdruck erzielt werden.

Eine weitere Stabilisierung der axialen Verpressung des Dichtungsringes beim Einschieben des Spitzendes in die Muffe und bei endgültig übergeschobener Muffe, also bei fertigmontierter Rohrsteckverbindung, kann dadurch erreicht werden, daß die innenliegende Dichtungsringfläche, also die Ringfußfläche, komplementär zum Profil der Fläche der Sohle der Sicke ausgebildet ist. Im Falle einer trapezförmigen Sicke mit zumindest im wesentlichen zylinderringförmiger Sohle ist also auch der Innenrand des Dichtungsringes streng zylindrisch und nicht beispielsweise toroid ausgebildet.

Bei im Vergleich zu ihrer Tiefe relativ breit ausgebildeter Sicke und entsprechend axial relativ breit und radial relativ flach ausgebildeten Dichtungsringen werden diese Dichtungsringe sowohl auf der Ringkrone als auch im Ringfuß mit mindestens einer Ringnut ausgebildet, so daß dadurch ein Ringgebilde entsteht, das als aus zwei in ihren Radialebenen aneinandergefügten Einzelringen entstanden gedacht werden kann. Das Schnurprofil eines solchen Ringes kann also gewissermaßen als durch Querschnittsvervielfältigung in axialer Richtung entstanden gedacht werden. Durch eine in der Mitte der Ringkrone verlaufende Ringnut und eine dieser gegenüberliegenden im Ringfuß ausgebildete relativ tiefe Ringnut würde also gewissermaßen eine Profilverdoppelung des Grundprofils des Dichtungsringes entstehen. In Gegenwart von jeweils zwei solcher parallel zueinander verlaufender Ringnuten würde eine Verdreifachung des Grundprofils erhalten werden. Solche Ausgestaltungen des Schnurprofils, die insbesondere bei größeren Nennweiten der Rohre an Bedeutung gewinnen, dienen vor allem einer Herabsetzung der Einschubkräfte und bei breiten Sicken einer Verbesserung der Dichtheit der Steckverbindung.

Das Schnurprofil des Dichtungsringes ist vorzugsweise so ausgebildet, daß die Profilkonturen nur aus ineinanderübergehenden Kreisbogenabschnitten bestehen. Eine Ausnahme bildet hierbei lediglich die bei trapezförmiger Sicke im Querschnitt geradlinig ausgebildete Innenrandfläche (Fußfläche) des Dichtungsringes.

Die Erfindung ist im folgenden anhand von Ausführungsbeispielen in Verbindung mit den Zeichnungen näher erläutert. Es zeigt

Fig. 1 in vergrößerter Teildarstellung und im Axialschnitt ein erstes Ausführungsbeispiel eines Dichtungsringes für eine trapezförmige Sicke,

Fig. 2 in vergrößerter Teildarstellung und im Axialschnitt den in Fig. 1 dargestellten Dichtungsring eingesetzt in die Sicke auf dem Spitzende eines Rippenrohres vor dem Aufschieben der Steckmuffe,

Fig. 3 in der Darstellungsweise der Fig. 2 das dort gezeigte Ausführungsbeispiel nach dem Überschieben der Steckmuffe und

Fig. 4 ein zweites Ausführungsbeispiel des Dichtungsringes in vergrößerter Teildarstellung und im Axialschnitt.

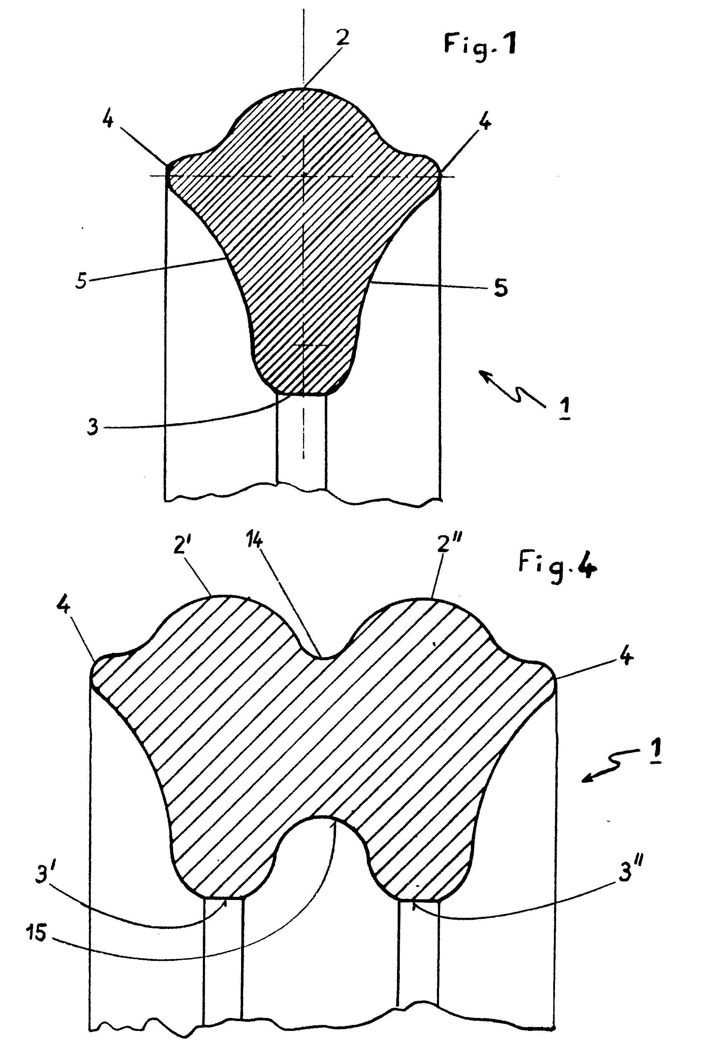

Der in der Fig. 1 dargestellte Dichtungsring 1 ist mit seinem im wesentlichen zumindest angenähert trapezförmigen keilriemenartigen Schnurprofil für den Einsatz in Verbindung mit einer ebenfalls zumindest im wesentlichen trapezförmigen Sicke zwischen zwei Rippen eines Rippenrohres bestimmt. Der Dichtungsring 1 besteht aus einem Elastomer, dessen Zusammensetzung und Kenndaten nach den Erfordernissen des speziellen Einsatzgebietes in an sich bekannter Weise festgelegt sind.

Die größte radiale Höhe zwischen der radial außenliegenden Ringkrone 2 und dem radial innenliegenden Ringfuß 3 des Dichtungsringes 1 ist im entspannten Zustand des Dichtungsringes 1 größer als die radiale Höhe der Sicke zwischen dem tiefsten Punkt der Sicke, nämlich der Sohle der Sicke, und der die beiden radial außenliegenden Oberkanten der Sicke verbindenden Geraden. Diese radiale Höhe 2−3 des Dichtungsringes 1 ist dabei um so viel höher als die Sickenhöhe, wie für die benötigte radiale Verpressung des Dichtungsringes 1 unter der Annahme und Voraussetzung einer freien axialen Verformbarkeit erforderlich ist.

Am Dichtungsring 1 sind im Bereich der Ringkrone 2 zwei einander gegenüberliegende in axialer Richtung vorspringende Ringschultern 4 angeformt. Der Ringdurchmesser dieser Ringschultern 4 ist mindestens gleich, in der Regel geringfügig größer als der Durchmesser der radial außenliegenden Sickenoberkanten. Dabei ist die axiale Breite 4−4 des Dichrungsringes auf der Schulterhöhe größer als die axiale Breite der oberen Sickenöffnung zwischen ihren Oberkanten. Gleichzeitig ist die axiale Breite des Ringfußes 3 zumindest etwas schmaler als die axiale Breite der Sohle der Sicke.

Die im wesentlichen in der Radialebene des Dichtungsringes 1 liegenden Seitenflächen 5 des Dichtungsringes 1 sind so stark konkav gekrümmt, daß sie bei vorbestimmter maximaler radialer Verpressung des Dichtungsringes 1 und bei freier axialer Verformung die Flankenflächen der Sicke, in die der Dichtungsring eingesetzt ist, entweder überhaupt nicht berühren oder diese mit einer nur unbeachtlichen axialen Belastung der Flankenflächen der Sicke berühren.

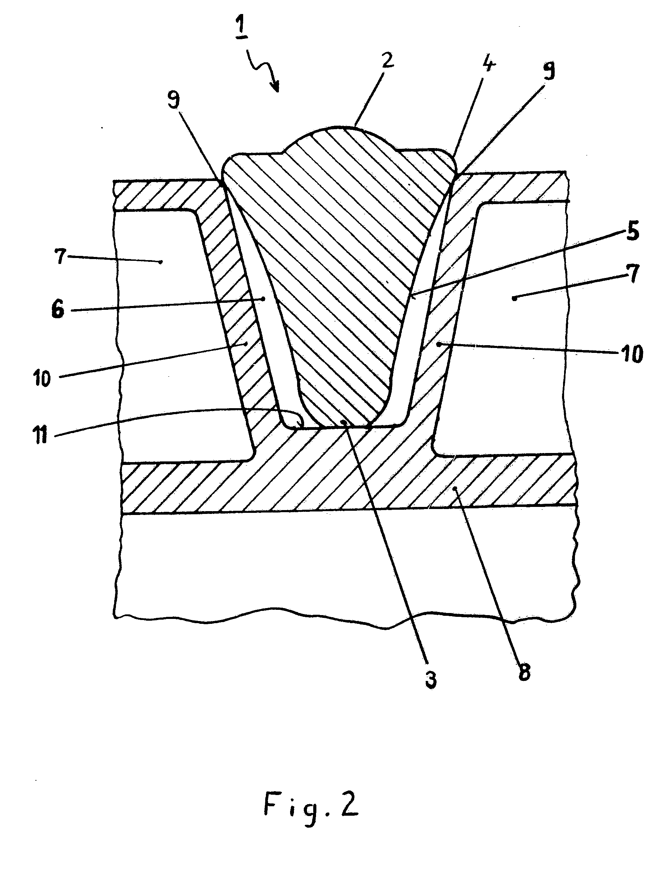

In der Fig. 2 ist der in Fig. 1 gezeigte Dichtungsring eingelegt in eine Sicke 6 dargestellt, die zwischen zwei Hohlrippen 7 des Spitzenendes eines Rippenrohres 8 ausgebildet ist. Die Sicke 6 weist radial außenliegend zwei Oberknaten 9, daran anschließend zwei seitliche Flanken 10 und eine radial innenliegende Sohle 11 auf. Die Sohle 11 der Sicke 6 ist zylindrisch ausgebildet. Die Sicke 6 weist ein trapezförmiges Profil mit nach radial außen weisender breiter offener Basis zwischen den beiden Oberkanten 9 auf. Der Innendurchmesser des Dichtungsringes 1, also der Durchmesser des Ringfußes 3, ist ungefähr gleich oder geringfügig kleiner als der Durchmesser der Sickensohle, 11, so daß der gummielastische Dichtungsring 1 ohne oder mit nur geringer Vorspannung in der Sicke 6 liegt. Die axiale Breite des Dichtungsringes 1 auf der Höhe seiner Ringschultern 4 ist geringfügig größer als der Abstand zwischen den Oberkanten 9 der Sicke 6. Außerdem ist der Ringradius der Schultern 4 etwas größer als der Radius der Oberkanten 9, so daß also insgesamt die Ringschultern 4 radial etwas über die Kanten 9 hinausgreifen. Zwischen den konkaven Seitenflächen 5 des Dichtungsringes 1 und den Flankenflächen 7 der Sicke 6 ist ausreichend Raum für eine freie axiale Verformbarkeit des Dichtungsringes 1 unter radialer Verpressung verfügbar.

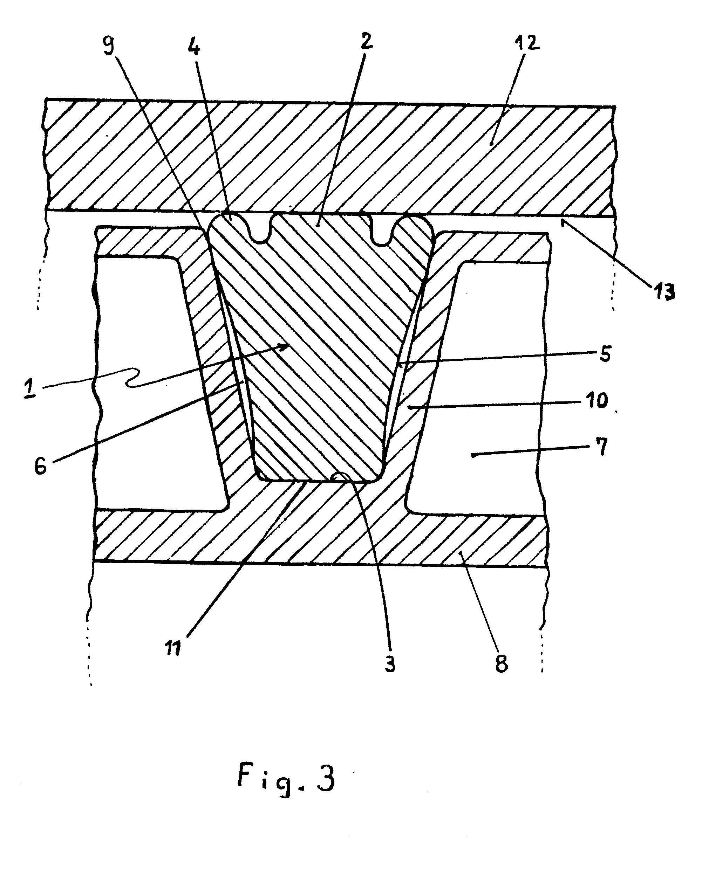

In der Fig. 3 ist das in Fig. 2 gezeigte Ausführungsbeispiel des in die Sicke 6 eingesetzten Dichtungsringes 1 bei übergeschobener Muffe 12 dargestellt. Die Innenwand 13 der Muffe 12 verpreßt den Dichtungsring 1 radial zwischen der ringwulstartig radial auswärts vorspringenden Ringkrone 2 und dem auf der Sohle 11 der Sicke 6 abgestützten Ringfuß 3. Die Seitenflächen 5 können sich dabei frei axial auswärts verformen, und zwar soweit, daß sie, wie in Fig. 3 dargestellt, selbst bei stärkster radialer Verformung des Dichtungsringes 1 die Flanken 10 der Sicke 6 noch nicht berühren. Der auf der Sohle 11 der Sicke 6 axial verformte Ringfuß 3 liegt dabei leicht am Fuß der Flanken 10 an, ohne jedoch auf diese eine nennenswerte axiale Kraft ausüben.

Durch das radiale Zusammendrücken des Dichtungsringes 1 zwischen der Innenwand 13 der Muffe 12 und der Sohle 11 der Sicke 6 werden auch die im entspannten Zustand axial überstehenden Ringschultern 4 des Dichtungsringes 1 zwischen die Oberkanten 9 der Sicke 6 eingedrückt. Die Ringschultern 4 schlagen dabei lippenartig nach radial auswärts um und üben so eine nur mäßige Verformungskraft in axialer Richtung auf die Oberkanten 9 der Sicke 6 bzw. der Hohlrippen 7 des Rippenrohres 8 aus. Diese axiale Kraft ist gerade so bemessen, daß sie den Dichtungsring 1 axial soweit fixiert oder stabilisiert, daß er gegen ein axiales Schwimmen abgestützt ist. Die hierzu erforderlichen Stützkräfte, die der Fachmann durch wenige Versuche selbst ohne weiteres bestimmen kann, sind wesentlich geringer als die durch die radiale Verpressung des Dichtungsringes 1 aufzubringenden Dichtungskräfte. In geringerem Maße trägt dabei aber auch der Andruck der radial auswärts umgeschlagenen Ringschultern 4 an der Sickenkante 9 zur zusätzlichen Dichtung der Anordnung bei.

Ein weiteres Ausführungsbeispiel des Dichtungsringes ist in vergrößerter Teildarstellung und im Axialschnitt in der Fig. 4 gezeigt. Der dargestellte Dichtungsring ist vor allem für Sickenprofile geeignet, die im Vergleich zu dem in den Fig. 2 und 3 gezeigten Sickenprofil axial breiter und radial flacher sind. Solche Sickenprofile treten insbesondere bei Rohren mit größeren Durchmessern auf. Für diese Profile werden vorzugsweise Dichtungsringe verwendet, deren Schnurprofil nicht einfach durch eine Verbreiterung des in Fig. 1 gezeigten Profils erhalten werden, sondern dadurch, daß in dem entsprechend der benötigten Sickenbreite verbreiterten Schnurprofil zusätzlich mindestens eine Ringnut 14 in der radial außenliegenden Ringkrone und mindestens eine zusätzliche Ringnut 15 im radial innenliegenden Ringfuß ausgebildet sind. Ist in der in Fig. 4 gezeigten Weise jeweils eine solche Ringnut in der Ringkrone bzw. im Ringfuß vorgesehen, so liegt diese Ringnut, wenn dies Spezialaufgaben nicht anders erfordern, vorzugsweise axial genau in der Mitte des Ringes. Die zusätzliche Ringnut 14 in der Ringkrone ist vorzugsweise so tief ausgebildet, daß ihre Sohle ungefähr auf dem Radius der Außenseite der Ringschultern 4 liegt. Statt der einen in Fig. 1 gezeigten Ringkrone 2 werden dadurch zwei zueinander symmetrische axial nebeneinanderliegende Ringkronen 2', 2'' erhalten. In entsprechender Weise werden durch die im Ringfuß 3 ausgebildete Ringnut 15 zwei axial nebeneinanderliegende Ringfußbereiche 3', 3'' erhalten. Die Ringnut 15 ist dabei prinzipiell im Hinblick auf eine Materialersparnis so tief wie möglich ausgebildet, jedoch höchstens nur so tief, daß die Stabilität des Dichtungsringes 1 nicht gefährdet wird. Stabilität heißt in diesem Zusammenhang sowohl die axiale Stabilität gegen ein axiales Schwimmen der Dichtung als auch die für eine reine radiale Kompression der Dichtung erforderliche Stabilität, daß also die Ringnut 15 nicht so tief und so breit ausgebildet ist, daß beispielsweise die Ringfüße 3' oder 3'' lippenartig axial abknicken.

In der aus Fig. 4 ersichtlichen Weise wird also durch diese Ausbildung der Ringnuten 14, 15 in der Ringkrone und im Ringfuß gegenüber dem in Fig. 1 dargestellten Schnurprofil gewissermaßen eine Profilverdopplung enthalten. Der in Fig. 4 dargestellte Dichtungsring kann durch axiales Verschmelzen von zwei Dichtungsringen der in Fig. 1 gezeigten Art entstanden gedacht werden. Bei entsprechend noch breiteren Sicken kann auch eine höhere Vervielfältigung des Schnurprofils, insbesondere eine Verdreifachung oder Vervierfachung, in Frage kommen, so daß der Dichtungsring also mehr die Gestalt eines bandförmigen Dichtungsringes annimmt.

Entscheidend bei dieser Profilvervielfachung ist aber stets, daß die axiale Stabilität zwischen den Schultern 4 und die reine radiale Verpreßbarkeit des Dichtungsringes zwischen den jeweils einander gegenüberliegenden Ringkronen 2' und Ringfüßen 3' erhalten bleibt. Der Dichtungsring muß also nach wie vor auch bei in sich flacherer Ausbildung des Gesamtschnurprofils das Verhalten einer Folge oder einer Kette einzelner rein radialer Kompressionsdichtungen behalten.

Der Vorteil des in Fig. 4 gezeigte Dichtungsringes für breite Sicken bei großen Rohrnennweiten gegenüber einem lediglich proportional verbreiterten Dichtungsring der in Fig. 1 gezeigten Art liegt vor allem neben der erzielbaren Materialersparnis darin, daß trotz Beibehaltung hoher Dichtungsdrücke die für das Überschieben der Steckmuffe erforderlichen Einschubkräfte kaum erhöht werden.

Bei Ausbildung des Dichtungsringes in der in Fig. 4 gezeigten Weise als Doppelring für eine Sicke mit zylinrischer Sohle sind vorzugsweise auch die beiden Innenflächen der Ringsohlen 3' und 3'' streng kreiszylindrisch ausgebildet, so daß diese glatt und bündig ohne axiales Verkippen beim radialen Verpressen des Ringes auf der Sohle der Sicke aufsetzen. Dabei ermöglicht die zwischen den beiden Ringfüßen 3' und 3'' ausgebildete Ringfußnut 15, daß sich die beiden Ringfußbereiche 3' und 3'' auch frei in axialer Richtung aufeinander zu verformen können. Dies wiederum führt zu einer weiteren Symmetrierung der radialen Kompressionskräfte, zu einer Vergrößerung der Auflagefläche auf der Sickensohle und damit insgesamt zu einer Stabilisierung der reinen radialen Kompressionskomponenten.

**Patentansprüche**

1. Dichtungsring aus gummielastischem Werkstoff für eine Rohrsteckverbindung zwischen dem Spitzende eines Rippenrohres (8) und einer inwandig glatten Muffe (12), bei welcher der Dichtungsring (1) in eine zwischen zwei benachbarten Rippen des Spitzendes gebildete Sicke (6) eingelegt ist, das Schnurprofil des Dichtungsringes (1) in seiner Grundform im wesentlichen dem Profil der Sicke (6) angepaßt ist, die größte radiale Höhe (2—3) des Schnurprofils um einen für eine vorgegebene radiale Verpressung des Dichtungsringes (1) zwischen der Innenwand (13) der Muffe (12) und der Sohle (11) der Sicke (6) benötigten Betrag größer als die Tiefe (9/9—11) der Sicke ist und am Dichtungsring (1) zwei einander gegenüberliegende, im wesentlichen axial vorspringende Ringschultern (4) mit einem Ringdurchmesser, der ungefähr gleich oder geringfügig größer ist als der Durchmesser der radial außenliegenden Sickenoberkanten (9) angeformt sind, dadurch gekennzeichnet, daß die axiale Breite (4-4) des Dichtungsringes auf der Schulterhöhe größer als die axiale Breite der Sicke (6) zwischen ihren radial außenliegenden Oberkanten (9) ist, daß die axiale Breite des Ringfußes (3) auf dem Innendurchmesser des Dichtungsringes (1), der ungefähr gleich dem Durchmesser der Sohle (11) der Sicke (6) ist, kleiner als die axiale Breite der Sohle (11) der Sicke (6) ist, und daß die im wesentlichen in der Radialebene des Dichtungsringes liegenden Seitenflächen (5) des Dichtungsringes (1) so stark konkav gegenüber den Flanken (10) der Sicke (6) ausgebildet sind, daß diese Seitenflächen (5) auch bei maximaler radialer Verpressung des bestimmungsgemäß eingesetzten Dichtungsringes (1) die Flanken (10) der Sicke (6) nicht oder mit nur unbeachtlicher axialer Belastung berühren.

2. Dichtungsring nach Anspruch 1, dadurch gekennzeichnet, daß die radial außenliegende Ringkrone (2) des Dichtungsringes (1) als Ringwulst mit radial auswärts vorspringendem Rundprofil ausgebildet ist.

3. Dichtungsring nach einem der Ansprüche 1 oder 2, dadurch gekennzeichnet, daß die Innenflächen des Ringfußes (3), mit der der Dichtungsring (1) bei bestimmungsgemäßen Einsatz auf der Sohle (11) der Sicke (6) aufliegt, komplementär zum Profil der Sohle (11) der Sicke (6) ausgebildet ist.

4. Dichtungsring nach einem der Ansprüche 1 bis 3, dadurch gekennzeichnet, daß in der Ringkrone (2) und/oder im Ringfuß (3) mindestens eine Ringnut (14; 15) ausgebildet ist.

5. Dichtungsring nach einem der Ansprüche 1 bis 4, dadurch gekennzeichnet, daß das Schnurprofil im Axialschnitt bis auf einen gegebenenfalls geradlinigen Verlauf auf der Innenfläche des Ringflußes (3) aus ineinander übergehenden Kreisbogenabschnitten zusammengesetzt ist.

**Claims**

1. A packing ring of elastic material for use in a spigot- and socket connection between an insidely flat coupling socket (12) and the spigot of a ribbed conduit (8); the packing ring (1) being inserted in a groove (6) formed between two adjacent ribs of the spigot; the radial profile of the packing ring (1) being adapted in its fundamental shape essentially to the profile of the groove (6); the profile of the packing ring having a radial diameter greater than the depth (9, 9—11) of the groove (6) to provide a predetermined radial compression between the inner wall (13) of the socket (12) and the groove root (11) when being assembled with the socket (12); a pair of essentially axially protruding shoulders (4) in opposition to one another, being at an annular diameter which is approximately equal or slightly larger than the diameter of the radial upper edges (9) of the groove (6), being formed on the packing ring, characterized by the axial width (4-4) of said packing ring (1) including the shoulders (4) being greater than the predetermined axial width of said groove (6) between said upper edges (9); the axial width of a bottom surface (3) on the inner packing ring diameter, which is approximately equal to the diameter of said groove root (11), being less than the axial width of said grovve root (11) and a pair of concave lateral surfaces (5), each lateral surface extending between a corresponding one of said shoulder (4) and said bottom surface (3), being provided essentially in the radial plain of said packing ring (1) and being operable to exert none or only a negligible axial stress on the groove sidewalls (10) when the packing ring is subjected also to maximal radial compression.

2. The packing ring of claim 1 wherein the crown portion (2) protrudes radially outwardly and is configured as an annular bead with a rounded shape.

3. The packing ring of claim 1 or 2 wherein the inner surfaces of said bottom surface (3), which are lying on the groove root (11) when being inserted predeterminedly, have a configuration complementary to the profile of the groove root (11).

4. The packing ring of claims 1, 2 or 3 including at least one annular groove (14; 15) in the crown portion (2) and/or in the bottom surface (3).

5. The packing ring of claims 1, 2, 3 or 4 wherein the profile of the axial cross section of the ring is defined by a plurality of circular arc sections passing into each other, with exception of a possible linearity of the inner surface of the bottom surface (3).

**Revendications**

1. Joint annulaire d'étanchéité en matériau caoutchouteux pour l'assemblage des tuyaux par l'emboîtement de l'extrémité mâle d'un tuyau à ailettes (8) dans un manchon (12) à paroi intérieure lisse, à l'effet de quoi le joint d'étanchéité (1) est placé dans une moulure (6) formée par deux ailettes voisines sur l'extrémité du tuyau à emboîter, alors que la coupe transversale du joint annulaire d'étanchéité (1) correspond dans ses grandes lignes à la coupe transversale de la moulure (6) que la plus grande hauteur (2—3) mesurée dans le sens radial du profil transversal est supérieure à la profondeur (9/9—11) de la moulure, d'une valeur définie en fonction d'une compression radiale donnée du joint d'étanchéité annulaire (1) entre la paroi intérieure (13) du manchon (12) et la base (11) de la moulure (6) et que la droite joignant les extrémités des deux épaulements circulaires (4) soudés de part et d'autre du joint d'étanchéité (1) et saillant dans le sens axial est approximativement égale ou légèrement supérieure à la droite joignant les arêtes extérieures (9) de la moulure, vu dans le sens radial, caractérisé en ce que la largeur axiale (4-4) du joint d'étanchéité annulaire (1) mesurée à la jauteur des épaulements est supérieure à la largeur axiale de la moulure (6) mesurée entre ses arêtes extérieures (9) vu dans le sens radial;
— en ce que la largeur axiale de la semelle (3) du joint annulaire mesurée sur le diamètre intérieur du joint annulaire d'étanchéité (1) lui-même égal au diamètre de la base (11) de la moulure (6) est inférieure à la largeur axiale de cette base (11) de la moulure (6);
— en ce que les parois latérales (5) se trouvant, pour l'essentiel dans le plan radial du joint annulaire (1) présentent une structure concave par rapport aux parois latérales (10) de la moulure (6) de manière que ces parois latérales (5), même sous l'effet d'une compression maximale dans le sens radial du joint annulaire d'étanchéité (1), n'exercent aucune poussée axiale ou alors n'exercent qu'une poussée négligeable sur les parois (10) de la moulure (6).

2. Joint annulaire d'étanchéité selon la revendication 1, caractérisé en ce que le dôme (2) de la couronne du joint annulaire (1) situé à l'extérieur dans le sens radial présente la forme d'un bourrelet circulaire à dos rond, saillant vers l'extérieur.

3. Joint annulaire d'étanchéité selon l'une des revendications 1 ou 2, caractérisé en ce que la paroi intérieure de la semelle (3), par l'intermédiaire de laquelle le joint annulaire d'étanchéité (1) structuré en fonction des besoins s'applique contre la base (11) de la moulure (6), présente une forme géométrique qui se complète avec le profil de la base (11) de la moulure (6).

4. Joint annulaire d'étanchéité selon l'une des revendications 1 à 3, caractérisé en ce que le dôle (2) et/ou la semelle (3) comportent une rainure circulaire (14, 15) au moins.

5. Joint annulaire d'étanchéité selon l'une des revendications 1 à 4, caractérisé en ce que les contours du profil, selon une coupe dans le sens axial, sont constitués à l'exclusion d'une section, le cas échéant en ligne droite, de la paroi intérieure de la semelle circulaire (3) d'une succession d'arcs de cercle se confondant les uns dans les autres.

0 012 166

Fig.1

2

4          4

5          5

3

1

Fig.4

2'    14    2"

4              4

3'          3"

15

1

Fig. 2

Fig. 3